# EUROPEAN PATENT APPLICATION

(11) **EP 4 629 497 A1**
(43) Date of publication of application: **08.10.2025**
(21) Application number: 23897596.5
(22) Date of filing: 21.11.2023
(51) Int. Cl.: H02M 7/48, H02K 7/116

(54) **ROTATING BODY DEVICE**

(30) Priority: 29.11.2022 JP 2022190587
(71) Applicant: DENSO CORPORATION, Kariya-city, Aichi 448-8661 (JP); Aisin Corporation, Kariya, Aichi 448-8650 (JP); Blue Nexus Corporation, Anjo-shi, Aichi 446-0058 (JP)
(72) Inventor: NISHIMACHI, Seiichiro, Kariya-city, Aichi 448-8661 (JP); SUZUKI, Tomoyuki, Kariya-city, Aichi 448-8650 (JP); KAWADE, Shunya, Kariya-city, Aichi 448-8661 (JP); SUGIMOTO, Noriaki, Kariya-city, Aichi 448-8661 (JP); YAMASAKI, Shoichi, Kariya-city, Aichi 448-8650 (JP); TORII, Takeshi, Anjo city, Aichi 446-0058 (JP)
(74) Representative: TBK
(86) International application number: PCT/JP2023/041724
(87) International publication number: WO 2024/116948

(57) **Abstract**

A motor unit (100) includes a first gear (10), a second gear (20), a motor (30), and a drive circuit. The motor (30) is arranged in line with the first gear in a rotation axis direction of the first gear and rotates together with the first gear. The second gear (20) is arranged in line with the first gear in an alignment direction different from the rotation axis direction and rotates together with the first gear. The drive circuit includes a capacitor (50) and drives and rotates at least one of the first gear, the motor, and the second gear. The capacitor is arranged adjacent to the motor. The capacitor is also arranged adjacent to the second gear.

## Description

### CROSS REFERENCE TO RELATED APPLICATION

The present application is based on Japanese Patent Application No. 2022-190587 filed on November 29, 2022, and the entire disclosure of the basic application is incorporated herein by reference.

### TECHNICAL FIELD

The present disclosure relates to a motor unit.

### BACKGROUND

Conventionally, as an example of a motor unit, there is a technique disclosed in Patent Literature 1. The motor unit has a motor and an inverter unit installed on an upper surface of the motor. The inverter unit includes a control board, a power unit including an inverter circuit, and a drive circuit such as a capacitor.

### PRIOR ART LITERATURE

### PATENT LITERATURE

Patent Literature 1: WO 2020/040278 A1

### SUMMARY OF THE INVENTION

Although not a conventional technique, a motor unit may be configured to include not only a drive circuit and a motor but also rotating bodies. In such a motor unit, there is a risk that the size of the unit may become large depending on arrangement of a capacitor. From the viewpoint described above or from other unmentioned viewpoints, there may be a demand for further improvement to the motor unit.

One disclosed object is to provide a motor unit with a smaller body size.

A motor unit includes a first rotating body, a second rotating body, a third rotating body, and a drive circuit. The second rotating body is arranged in line with the first rotating body in a rotation axis direction of the first rotating body and rotates together with the first rotating body. The third rotating body is arranged in line with the first rotating body in an alignment direction different from the rotation axis direction and rotates together with the first rotating body. The drive circuit includes a capacitor and drives and rotates at least one of the first rotating body, the second rotating body, and the third rotating body. The capacitor is arranged adjacent to the second rotating body. The capacitor is also arranged adjacent to the third rotating body.

In this manner, in the motor unit, the capacitor is disposed adjacent to the second rotating body and the third rotating body. Therefore, the motor unit can effectively utilize a dead space adjacent to the second rotating body and the third rotating body. Therefore, the motor unit can be made smaller in size.

The disclosed aspects in this specification adopt different technical solutions from each other in order to achieve their respective objectives. The objects, features, and advantages disclosed in this specification will become apparent by referring to following detailed descriptions and accompanying drawings.

### BRIEF DESCRIPTION OF DRAWINGS

FIG. 1 is a plan view illustrating a schematic configuration of a motor unit.
FIG. 2 is a side view from an arrow II in FIG. 1.
FIG. 3 is a plan view illustrating a schematic configuration of the motor unit with a top cover removed.
FIG. 4 is a cross-sectional view taken along a line IV-IV of FIG. 3.
FIG. 5 is a diagram illustrating a schematic configuration inside a housing from an arrow II in FIG. 1.
FIG. 6 is a cross-sectional view taken along line VI-VI of FIG. 3.
FIG. 7 is a cross-sectional view illustrating a schematic configuration of a motor unit according to a first modification.
FIG. 8 is a plan view illustrating a schematic configuration of the motor unit with a top cover removed according to a second modification.
FIG. 9 is a cross-sectional view illustrating a schematic configuration of a motor unit according to a third modification.
FIG. 10 is a diagram illustrating a schematic configuration inside a housing of a motor unit according to a fourth modification.

### DETAILED DESCRIPTION

As follows, multiple embodiments for implementing the present disclosure will be described with reference to the drawings. In each embodiment, portions corresponding to those described in the preceding embodiment are denoted by the same reference numerals, and redundant descriptions will be omitted in some cases. In each embodiment, in a case where only a part of the configuration is described, the other part of the configuration may be applied with reference to the other embodiment described above.

Hereinafter, three directions perpendicular to each other are denoted as an X-direction, a Y-direction, and a Z-direction. In addition, a plane defined by the X-direction and the Y-direction is denoted as an XY-plane, a plane defined by the X-direction and the Z-direction is denoted as an XZ-plane, and a plane defined by the Y-direction and the Z-direction is denoted as a YZ-plane. Hereinafter, the Z-direction will also be referred to as a up-down direction.

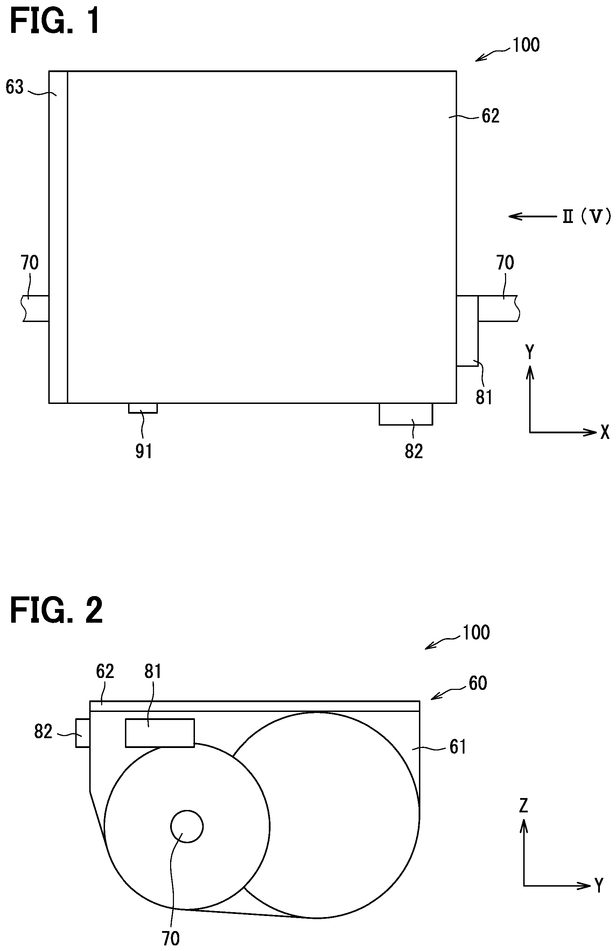

As shown in FIGS. 1, 2, 3, a motor unit 100 includes a circuit board 1, a first gear 10, a second gear 20, a motor 30, a drive circuit, for example a power module 40 and a capacitor 50, a housing 60. The motor unit 100 is configured to be installed on a vehicle, for example. The motor unit 100 is a drive source for the vehicle. The motor unit 100 controls driving of the motor 30 to rotate wheels via a drive shaft 70.

The motor unit 100 is mounted, for example, under a floor in a foot area of front seats of the vehicle, or under a luggage compartment of the vehicle. The motor unit 100 may also be mounted below a brake mechanism of the vehicle. The motor unit 100 can be made low-profile, as will be described later. Therefore, the motor unit 100 can be easily installed in vehicle models where miniaturization is an issue.

### <Rotation Mechanism>

The motor unit 100 includes the first gear 10, the second gear 20, and the motor 30 as a rotation mechanism 10 to 30. The first gear 10 and the second gear 20 rotate in conjunction with the rotation of the motor 30. The first gear 10, the second gear 20, and the motor 30 are collectively referred to as the rotation mechanism 10 to 30.

The motor 30 includes a rotor and a stator (windings). The rotor is fixed to a motor shaft 31. The motor shaft 31 is a rotation shaft of the motor 30. The stator is electrically connected to the power module 40 via a busbar. The motor 30 is rotationally driven by the power module 40. The motor 30 is a heat-generating component that generates heat when the motor 30 is rotated. The rotation of the motor 30 refers to the rotation of the rotor and the motor shaft 31. It can be said that the motor 30 includes the rotor and the motor shaft 31, which are the motor mechanism, as rotating parts. The motor shaft 31 extends along the X-direction.

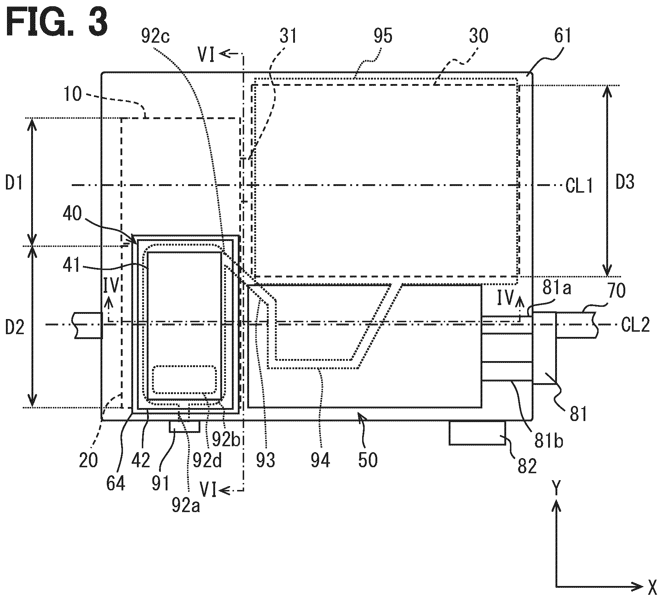

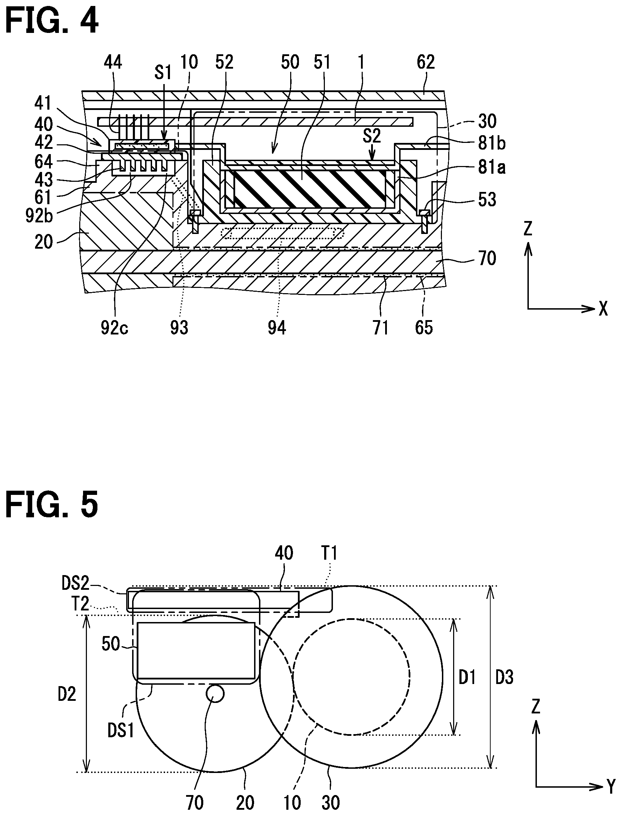

As shown in FIGS. 3, 5, the motor 30 has a substantially cylindrical shape. The motor 30 is disposed next to the first gear 10 in a direction of the rotation axis of the motor shaft 31. In other words, the first gear 10 is disposed in an axial direction of the motor shaft 31. The symbol "CL1" in FIG. 3 denotes a center line passing through a center of the motor 30. The center line CL1 coincides with the motor shaft 31. The center line CL1 also passes through a center of the first gear 10. The motor 30 may be, for example, a brushless three-phase motor. The motor 30 corresponds to a second rotating body.

The first gear 10 includes a double helical gear, a helical gear, a planetary gear, or the like. The first gear 10 is connected to the motor shaft 31. Therefore, it can be said that the first gear 10 rotates together with the motor 30. Further, a rotation axis direction of the first gear 10 coincides with the axial direction of the motor shaft 31. The first gear 10 is a heat-generating component that generates heat when rotated. As shown in FIGS. 3, 5, the first gear 10 has a substantially cylindrical shape. The rotation of the first gear 10 is the rotation of the double helical gear or the planetary gear. It can also be said that the first gear 10 is equipped with the double helical gear as a rotating part connected to the rotation shaft of the motor 30. The double helical gear of the first gear 10 corresponds to a first gear. The first gear 10 corresponds to a first rotating body.

The second gear 20 includes a double helical gear, a helical gear, a differential gear. In addition, the second gear 20 is fixed to the drive shaft 70. Therefore, the drive shaft 70 rotates together with the second gear 20. The drive shaft 70 coincides with the rotation axis of the second gear 20. The second gear 20 is a heat-generating component that generates heat when rotated.

Moreover, a symbol "CL2" in FIG. 3 denotes a center line passing through the center of the second gear 20. The center line CL2 coincides with the drive shaft 70. It can also be said that the second gear 20 has lubricating oil 71 and the drive shaft 70 arranged in a shaft hole 65 of the housing 60. The lubricating oil 71 is provided to prevent wear of the drive shaft 70 and a base 61.

The rotation axis of the second gear 20 extends along the X-direction. Therefore, the center line CL1 and the center line CL2 satisfy a parallel positional relationship. In other words, the rotation shaft of the second gear 20 and the rotation shaft of the motor 30 are arranged in parallel. However, the center lines CL1 and CL2 may be misaligned in the Z-direction. In this manner, the motor unit 100 has a configuration with two rotation shafts.

As shown in FIGS. 3, 5, the second gear 20 is arranged side by side with the first gear 10 in an arrangement direction different from the rotation axis direction of the first gear 10. In the present embodiment, an example is adopted in which the first gear 10 and the second gear 20 are aligned in a direction perpendicular to the rotation axis direction of the first gear 10. The first gear 10 and the second gear 20 are disposed side by side in the Y-direction. However, the present disclosure is not limited to this. A direction in which the first gear 10 and the second gear 20 are aligned will also be simply referred to as an alignment direction.

In addition, the second gear 20 is disposed so as to mesh with the first gear 10. In other words, the second gear 20 and the first gear 10 have their double helical gears meshed with each other. Therefore, the second gear 20 rotates together with the first gear 10. The second gear 20 has a substantially cylindrical shape. The rotation of the second gear 20 refers to the rotation of the double helical gear, the differential gear, and the drive shaft 70. The second gear 20 includes a double helical gear that is arranged adjacent to the double helical gear of the first gear 10 and rotates in mesh with it. The double helical gear of the second gear 20 corresponds to a second gear. The second gear 20 corresponds to a third rotating body.

As shown in FIG. 3, the first gear 10 and the second gear 20 have approximately the same length in the X-direction. Moreover, the first gear 10 and the second gear 20 are disposed side by side in the Y-direction. Therefore, a region adjacent to the second gear 20 and the motor 30 becomes a dead space. For example, a region indicated by "DS1" in FIG. 5 is part of the dead space. The region adjacent to the second gear 20 and the motor 30 is a region adjacent to the second gear 20 in the X-direction and also adjacent to the motor 30 in the alignment direction. The second gear 20 is a portion including the double helical gear and the differential gear, excluding the drive shaft 70.

As shown in FIGS. 3 and 5, the rotation mechanism 10 to 30 have different diameters. A relationship between a diameter D1 of the first gear 10, a diameter D2 of the second gear 20, and a diameter D3 of the motor 30 is D1 < D2 < D3. In other words, the motor 30 has a larger diameter than the first gear 10 and the second gear 20. It should be noted that "D1" is a diameter of a portion of the first gear 10 that has a maximum diameter. The diameter D2 is a diameter of a portion of the second gear 20 that has a maximum diameter. The diameter D3 is a diameter of a portion of the motor 30 that has a maximum diameter. The diameter of each of the rotation mechanism 10 to 30 can also be considered as the diameter of the portion of the housing 60 that houses the rotation mechanism 10 to 30.

Therefore, in the present embodiment, as an example, the rotation mechanism 10 to 30 having different diameters are adopted. However, the present disclosure is not limited to this. That is, the rotation mechanism 10 to 30 may have the same diameter.

As shown in FIG. 5, the second gear 20 and the motor 30 have different apex positions in the up-down direction. Therefore, an imaginary plane T2 passing through an apex of the second gear 20 is located at a different position in the up-down direction from an imaginary plane T1 passing through an apex of the motor 30. The imaginary plane T1 and the imaginary plane T2 are parallel to the XY-plane. The imaginary plane T1 can also be said to be an imaginary plane parallel to the imaginary plane T2. A space between the imaginary plane T1 and the imaginary plane T2 becomes a dead space DS2 in the up-down direction.

### <Drive Circuit>

The drive circuit is a circuit that drives the motor 30, which is one of the rotation mechanism. The drive circuit includes a power module 40 and a capacitor 50. Hereinafter, the power module 40 and the capacitor 50 will be collectively referred to as a drive circuit 40 to 50. The drive circuit may include the circuit board 1.

The power module 40 includes a semiconductor device 41 including semiconductor switching elements. The semiconductor device 41 constitutes a three-phase inverter including the semiconductor switching elements. The semiconductor switching elements may be power metal oxide semiconductor field effect transistors (MOSFETs) and integrated gate bipolar transistors (IGBTs). As shown in FIG. 4, the semiconductor device 41 is electrically connected to the circuit board 1 via a terminal 44. In the semiconductor device 41, the semiconductor switching elements are controlled to be turned on and off by control signals from the circuit board 1. The power module 40 is a heat-generating component that generates heat when rotated. In other words, when the power module 40 is driven, the semiconductor device 41 generates heat by turning on and off the semiconductor switching elements. The power module 40 is mounted on a heat sink 42 provided with fins 43 for heat dissipation in order to cool the semiconductor device 41. The power module 40 corresponds to a power module.

As shown in FIG. 3, at least a portion of the power module 40 is disposed opposite to the second gear 20 in the Z-direction. As shown in FIG. 5, the power module 40 is disposed between the imaginary plane T1 and the imaginary plane T2. However, the power module 40 does not have to be disposed between the imaginary plane T1 and the imaginary plane T2.

The capacitor 50 is a smoothing capacitor connected to an input of the three-phase inverter. As shown in FIG. 4, the capacitor 50 includes a capacitor element 51, a capacitor case 52, and a fixing member 53. The capacitor element 51 has a positive terminal connected to a P busbar 81a and a negative terminal connected to an N busbar 81b. The capacitor element 51 is housed in the capacitor case 52. The capacitor case 52 may be one that seals the capacitor element 51 with resin while leaving a portion of the P busbar 81a and the N busbar 81b exposed, for example. The capacitor case 52 is fixed to the housing 60 by the fixing member 53. The capacitor 50 corresponds to a capacitor.

As shown in FIGS. 3 to 5, at least a portion of the capacitor 50 is disposed opposite the drive shaft 70 in the Z-direction. At least a portion of the capacitor 50 is disposed opposite the motor 30 in the Y-direction, and opposite the second gear 20 in the X-direction. In other words, the capacitor 50 is disposed adjacent to the second gear 20 and the motor 30. It can also be said that at least a portion of the capacitor 50 is disposed within a facing region of the motor 30 and within a facing region of the second gear 20. Furthermore, the capacitor 50 may be disposed within the facing region of the second gear 20 in the X-direction, and within a region of the diameter of the second gear 20 along the Y-direction and within a region of the diameter of the second gear 20 along the Z-direction.

### <Housing>

As shown in FIGS. 1, 2, 4, 6, the housing 60 includes a base 61, an upper cover 62, and a side cover 63. The housing 60 accommodates the rotation mechanism 10 to 30 and the drive circuit 40 to 50. The base 61 is made primarily of a metal such as aluminum. The base 61 has a housing space for accommodating the rotation mechanism 10 to 30 and the drive circuit 40 to 50. The base 61 has a housing space that is open in two directions, the X-direction and the Z-direction. The upper cover 62 is a member that is attached to the base 61 to close one of the openings. The side cover 63 is a member that is attached to the base 61 to close the other opening. The housing 60 corresponds to a case.

In the present embodiment, as an example, the housing 60 including the base 61, the upper cover 62, and the side cover 63 is used. However, the present disclosure is not limited to this. The housing 60 may be a housing made up of two components, such as a base 61 and an upper cover 62.

As shown in FIG. 4, the base 61 has a mounting portion 64 on which the power module 40 is mounted. The power module 40 is mounted on the mounting portion 64 via the heat sink 42. The mounting portion 64 has a module cooling path 92b which is a part of a coolant flow path. The module cooling path 92b is a portion that is recessed from a surrounding area. The power module 40 is mounted on the mounting portion 64 with the fins 43 of the heat sink 42 disposed in the module cooling path 92b. The coolant flow path will be described in detail later.

As shown in FIG. 4, the base 61 has a shaft hole 65 in which the drive shaft 70 is disposed. Furthermore, the lubricating oil 71 is disposed between the shaft hole 65 and the drive shaft 70. The lubricating oil 71 is provided to reduce frictional force and frictional heat generated between the drive shaft 70 and the base 61 when the drive shaft 70 rotates. Furthermore, the lubricating oil 71 is provided to prevent wear of the drive shaft 70 and the base 61. The shaft hole 65 corresponds to an axle hole.

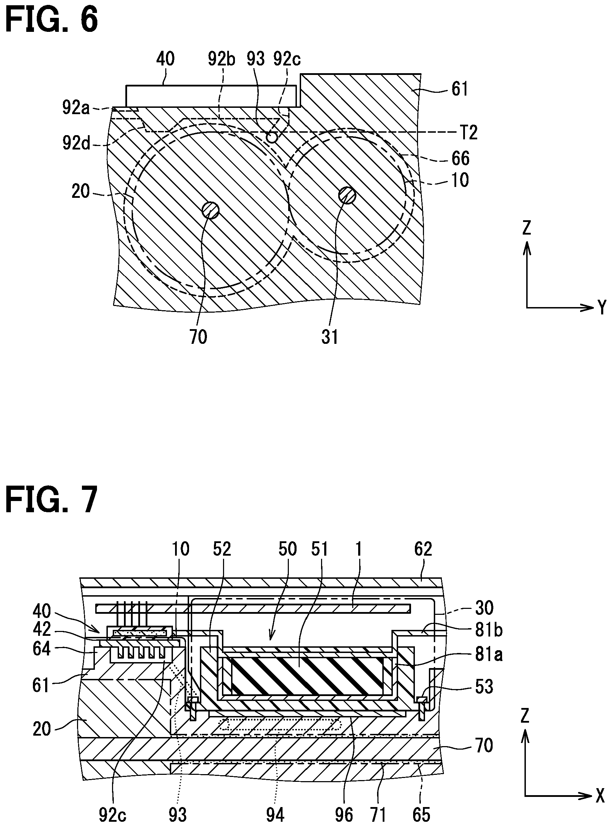

As shown in FIG. 6, the base 61 has a rotating-body housing portion 66 for housing the rotation mechanism 10 to 30. The rotating-body housing portion 66 is a hole having a curved surface shape that fits an outer shape of each of the rotation mechanism 10 to 30. The rotating-body housing portion 66 may have lubricating oil disposed in an area accommodating the first gear 10 and the second gear 20.

As shown in FIGS. 3 and 4, the base 61 (the housing 60) has a coolant flow path through which coolant such as cooling water flows. The coolant flow path is provided to cool the motor 30, the power module 40, the capacitor 50, and the like. The base 61 has two coolant ports 91 for allowing the coolant to flow in and out of the coolant flow path. The coolant is supplied from one coolant port 91, passes through the coolant flow path, and is discharged from the other coolant port 91. In the present embodiment, only one of the coolant ports 91 is shown. The coolant port 91 can be considered as part of the coolant flow path.

The coolant flow path includes an inflow port 92a, a module cooling path 92b, an outlet port 92c, a recess 92d, a connecting path 93, an opposed cooling path 94, a motor cooling path 95, and the like. The inflow port 92a, the module cooling path 92b, the outlet port 92c, the recess 92d, the connecting path 93, the opposed cooling path 94, and the motor cooling path 95 are interconnected so that the coolant flows continuously.

The module cooling path 92b is provided in a facing region facing the power module 40. The module cooling path 92b is provided to cool the power module 40. The module cooling path 92b has a space larger than the connecting path 93, which will be described later, in order to cool an entire area of the power module 40. Therefore, the module cooling path 92b can also be considered as a cooling chamber through which the coolant flows.

The module cooling path 92b has the inflow port 92a and the outlet port 92c. The inflow port 92a is an inlet for the coolant to the module cooling path 92b. The outlet port 92c is an outlet for the coolant to the module cooling path 92b. The outlet port 92c opens in the rotation axis direction and communicates with the connecting path 93. As a result, the motor unit 100 can be compact in size in the Y-direction. However, a direction of the outlet port 92c is not limited to this.

The inflow port 92a opens in a direction different from that of the second gear 20, and is provided between the imaginary plane T1 and the second gear 20. In other words, the inflow port 92a is disposed so as to overlap the second gear 20 in the up-down direction within a range not exceeding the imaginary plane T1. As a result, the motor unit 100 can be compact in size in the up-down direction. It can also be said that the motor unit 100 can be made low-profile. As shown in FIG. 3, the coolant flow path has a bent shape in a range from the inflow port 92a to the connecting path 93 on the XY-plane. The coolant flow path may have an L-shape in the range from the inflow port 92a to the connecting path 93 in the XY-plane.

However, the inflow port 92a and the outlet port 92c are not limited to this. The inflow port 92a and the outlet port 92c may be open in the rotation axis direction. In other words, the inflow port 92a may open in the same direction as the outlet port 92c. In this case, the coolant flow path communicating with the inflow port 92a can be arranged in parallel with the coolant flow path communicating with the outlet port 92c.

As a result, the motor unit 100 can be more compact in size in the Y-direction than a configuration in which the inflow port 92a and the outlet port 92c open in different directions. Furthermore, the motor unit 100 is provided with the rotating-body housing portion 66 for accommodating the cylindrical rotation mechanism 10 to 30, so that the dead space formed in the base 61 can be utilized as the coolant flow path. The dead space here is a part of the base 61. The dead space is a region where a housing portion for the first gear 10 and the motor 30 face a housing portion for the second gear 20. Therefore, it can be said that the motor unit 100 can be made smaller in size in the Y-direction while maintaining dimensions other than those of the coolant flow path. The dead space here can also be called a dead space between the rotating bodies. The housing portion for the first gear 10 and the motor 30 is a part of the rotating-body housing portion 66. Similarly, the housing portion for the second gear 20 is a part of the rotating-body housing portion 66.

A positional relationship between the inflow port 92a and the outlet port 92c may be reversed. That is, the coolant may enter the module cooling path 92b through the outlet port 92c and exit through the inflow port 92a.

As shown in FIG. 6, the module cooling path 92b is provided between the second gear 20 and the power module 40. The module cooling path 92b is provided with a recess 92d that is recessed from a surrounding area. The recess 92d is provided closer to the inflow port 92a than the outlet port 92c. The recess 92d is provided to temporarily hold the coolant that has flowed into the module cooling path 92b. As a result, the coolant flows evenly within the module cooling path 92b. That is, the coolant does not flow from the inflow port 92a and straight toward the outlet port 92c, but flows into the recess 92d and spreads in the X-direction while easily flowing toward the outlet port 92c. Therefore, the entire surface of the power module 40 facing the module cooling path 92b can be cooled.

As shown in FIGS. 3, 4, the outlet port 92c communicates with the connecting path 93. The connecting path 93 is a portion that connects the module cooling path 92b and the opposed cooling path 94. The connecting path 93 is provided in a portion of the base 61 that is disposed between the module cooling path 92b and the capacitor 50. The outlet port 92c and the opposed cooling path 94 are provided at different positions in the X-direction, the Y-direction, and the Z-direction. For this reason, the connecting path 93 is provided at an incline with respect to the X-direction, the Y-direction, and the Z-direction.

As shown in FIGS. 3, 6, at least a portion of the connecting path 93 is disposed in a region surrounded by the imaginary plane T2, the second gear 20, and the motor 30. In other words, a portion of the connecting path 93 is provided in a region having a triangular cross section surrounded by the second gear 20, the motor 30, and the imaginary plane T2 in FIG. 5. In other words, a portion of the connecting path 93 is provided in the dead space between the rotating bodies. Therefore, the motor unit 100 can effectively utilize the dead space between the rotating bodies. Furthermore, the motor unit 100 can achieve a low height while having the cooling capacity provided by the connecting path 93.

Furthermore, the motor unit 100 makes it easier to ensure a sufficient cross-sectional area of the connecting path 93 (an area of a space through which the coolant flows). Therefore, the motor unit 100 can reduce pressure loss in the connecting path 93. Accordingly, the motor unit 100 can reduce a decrease in a flow rate and flow speed of the coolant between the outlet port 92c and the opposed cooling path 94. However, a configuration of the connecting path 93 is not limited to the configuration described above.

The coolant flows through the module cooling path 92b and flows out from the outlet port 92c, then passes through the connecting path 93 and flows into the opposed cooling path 94. The opposed cooling path 94 is provided mainly for cooling the capacitor 50. The opposed cooling path 94 is opposed to the capacitor 50 in the Z-direction. The opposed cooling path 94 is opposed to the capacitor 50 via a part of the base 61. It is sufficient that at least a portion of the opposed cooling path 94 is opposed to the capacitor 50. In other words, the opposed cooling path 94 may be provided so as to face the entire area of a bottom surface of the capacitor 50 along the XY-plane.

Furthermore, the capacitor 50 is opposed to the drive shaft 70 with the opposed cooling path 94 disposed therebetween. In other words, the opposed cooling path 94 is disposed between the capacitor 50 and the drive shaft 70. The lubricating oil 71 is provided between the drive shaft 70 and the shaft hole 65. The lubricating oil 71 generates heat when the drive shaft 70 rotates. Therefore, the lubricating oil 71 can be considered as a heat generating component. However, since the motor unit 100 has the opposed cooling path 94, transfer of heat from the lubricating oil 71 to the capacitor 50 can be reduced.

The coolant flows from the opposed cooling path 94 to the motor cooling path 95. The motor cooling path 95 is provided in the circumferential direction around the rotation axis of the motor 30. The motor cooling path 95 is opposed to substantially an entire periphery of the motor 30 via a part of the base 61.

The capacitor 50 is mainly cooled by the coolant flowing through the opposed cooling path 94. However, the capacitor 50 is opposed to the module cooling path 92b, the connecting path 93 and the motor cooling path 95. Therefore, the capacitor 50 is cooled not only by the coolant flowing through the opposed cooling path 94 but also by the coolant flowing through the module cooling path 92b, the connecting path 93, and the motor cooling path 95. Therefore, it can be said that the capacitor 50 has three cooling surfaces. The present disclosure may also be adopted in a capacitor 50 having two cooling surfaces. The capacitor 50 having three cooling surfaces is capable of improving cooling efficiency more than the capacitor 50 having two cooling surfaces.

The three cooling surfaces are a wall surface along the YZ-plane, a wall surface along the ZY-plane, and a wall surface along the XZ-plane in the capacitor 50. The wall surface along the XY-plane is a facing surface facing the opposed cooling path 94. The wall surface along the YZ-plane is a facing surface facing the module cooling path 92b and the connecting path 93. The XZ-plane is a facing surface facing the motor cooling path 95.

Furthermore, it can be said that the motor unit 100 has the module cooling path 92b, the connecting path 93, the opposed cooling path 94, and the motor cooling path 95 provided as heat shielding layers in a facing region between the capacitor 50 and the heat-generating components. In addition, in the present embodiment, as described above, it can be said that the heat shielding layer is disposed opposite two or more surfaces of the capacitor 50 facing the heat-generating components.

The heat shielding layer is a portion for reducing the heat transfer from the heat-generating components to the capacitor 50. In the present embodiment, the coolant flow path is used as an example of the heat shielding layer. However, the present disclosure is not limited to this. The heat shielding layer may be made of rubber (polymer material) or plate material having low thermal conductivity.

Furthermore, the capacitor 50 may be mounted on the base 61 via rubber as a heat shielding layer. In this case, the capacitor 50 is supported by the heat shield layer. The capacitor 50 can obtain a cushioning effect due to the heat shielding layer. Therefore, the motor unit 100 is capable of improving earthquake resistance of the capacitor 50 compared to a configuration in which the heat shielding layer is not provided. The module cooling path 92b, the connecting path 93, the opposed cooling path 94, and the motor cooling path 95 allow the coolant to flow therethrough, thereby cooling the surrounding space. In other words, in the motor unit 100, cooling spaces are formed around the module cooling path 92b, the connecting path 93, the opposed cooling path 94, and the motor cooling path 95. The capacitor 50 is disposed in the cooling spaces. Therefore, the motor unit 100 is capable of efficiently cooling the capacitor 50.

As shown in FIGS. 1, 2, the motor unit 100 includes a PN connector 81 and a communication connector 82. The PN connector 81 and the communication connector 82 are provided in the housing 60. The PN connector 81 is a portion where the tips of the P busbar 81a and the N busbar 81b are arranged. The PN connector 81 is connected to a power source such as a battery. The power supply is connected to the P busbar 81a and the N busbar 81b when the power supply is connected to the PN connector 81.

The PN connector 81 is provided at a position in the housing 60 that is different from the coolant flow path. More specifically, the PN connector 81 is provided at a position different from a coolant port 91 in the housing 60. Further, the tips of the P busbar 81a and the N busbar 81b are arranged in the PN connector 81 in a direction of a surface of the capacitor 50 that does not have the coolant path arranged opposite each other. As a result, the motor unit 100 is capable of reducing leakage even if the coolant leaks from the coolant flow path such as the coolant port 91. The PN connector 81 corresponds to an external connection terminal of the drive circuit.

The communication connector 82 is a communication interface between the circuit board 1 and an electronic control unit or the like provided outside the motor unit 100. However, the motor unit 100 does not necessarily have to be provided with the communication connector 82.

### <Effects>

As described above, the capacitor 50 is disposed adjacent to the second gear 20 and the motor 30. Therefore, the motor unit 100 is capable of effectively utilizing the dead space DS1. Therefore, the motor unit 100 can be made smaller in size.

It is desirable for the motor unit 100 to be compact in size. For this reason, in the motor unit 100, the rotation mechanism 10 to 30 and the drive circuit 40 to 50 may be located close to each other. In this case, in the motor unit 100, a distance between the capacitor 50 and the heat-generating components is also reduced. Therefore, heat from the heat-generating components is easily transferred to the capacitor 50. In other words, the capacitor 50 is susceptible to heat damage. The capacitor 50 is subject to heat damage, and the output thereof is limited. However, by providing the coolant flow path in the dead space between the rotating bodies of the base 61, the motor unit 100 is capable of reducing the heat damage to the capacitor 50 while preventing the device from becoming larger in size.

In addition, in the motor unit 100, the power module 40 is disposed in the dead space DS2 between the imaginary plane T1 and the imaginary plane T2. Therefore, the motor unit 100 is capable of effectively utilizing the dead space DS2. Therefore, the motor unit 100 can be made smaller in size in the up-down direction. It can also be said that the motor unit 100 can be made low-profile.

The motor unit 100 is provided with the module cooling path 92b between the second gear 20 and the power module 40. Therefore, the motor unit 100 is capable of reducing the heat transfer between the second gear 20 and the power module 40.

In the present embodiment, the first gear 10 is used as a first rotating body, and the motor 30 is used as a second rotating body. However, the present disclosure is not limited to this. The present disclosure may also be adopted in a configuration in which the first rotating body is a gear and the second rotating body is a gear. The present disclosure may also be adopted in a configuration in which the first rotating body is a motor and the second rotating body is a gear. Furthermore, the present disclosure may also be adopted in a configuration in which the first rotating body is a motor and the second rotating body is a motor. In this case, the drive circuit may drive and rotate both motors.

The first embodiment of the present disclosure has been described above. However, the present disclosure is not limited in any way to the above-mentioned embodiment, and various modifications can be performed without departing from the spirit of the present disclosure. First to fourth modifications will be described as the other embodiments in the following. The above-mentioned embodiment and the first to the fourth modifications can be implemented independently, but they can be suitably combined and implemented. The present disclosure is not limited to the combinations shown in the embodiments, but can be implemented by various combinations.

### First Modification

As shown in FIG. 7, in the motor unit 100, a heat dissipation member 96 is disposed between the capacitor 50 and the opposed cooling path 94. FIG. 7 is a cross-sectional view corresponding to FIG. 4. The heat dissipation member 96 can be employed in sheet or gel form. The heat dissipation member 96 is provided in at least a part of a facing region between the capacitor 50 and the opposed cooling path 94. In the present embodiment, as an example, the heat dissipation member 96 is disposed in a recess of the base 61. However, the present disclosure is not limited to this. The heat dissipation member 96 may be provided on a flat surface of the base 61 that is not recessed.

By providing the heat dissipation member 96, the motor unit 100 is capable of reducing thermal resistance between the capacitor 50 and the opposed cooling path 94. Therefore, the motor unit 100 is capable of improving the cooling effect compared to a configuration in which the heat dissipation member 96 is not provided. The configuration of the first modification can be implemented in combination with the above embodiment.

### Second Modification

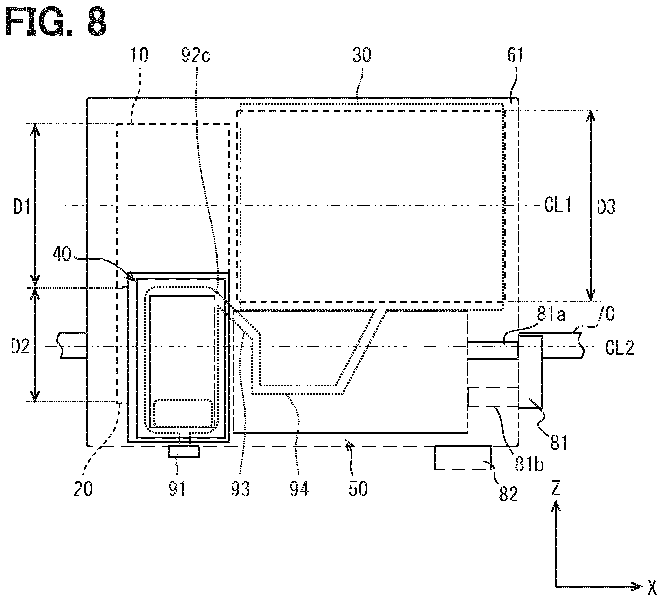

As shown in FIG. 8, in the motor unit 100, a size relationship between the first gear 10 and the second gear 20 may be reversed. In other words, a relationship between the diameter D1 of the first gear 10, the diameter D2 of the second gear 20, and the diameter D3 of the motor 30 may be D2 < D1 < D3. FIG. 8 is a plan view corresponding to FIG. 3.

### Third Modification

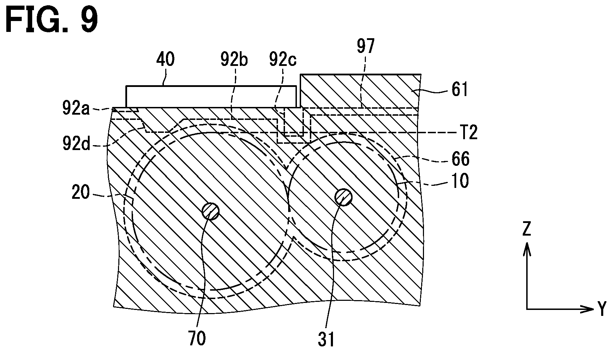

As shown in FIG. 9, in the motor unit 100, the outlet port 92c communicates with an extension path 97 extending in the Y-direction, rather than with the connecting path 93. At least a portion of the extension path 97 is provided in a dead space between the rotating bodies. FIG. 9 is a cross-sectional view corresponding to FIG. 6.

### Fourth modification

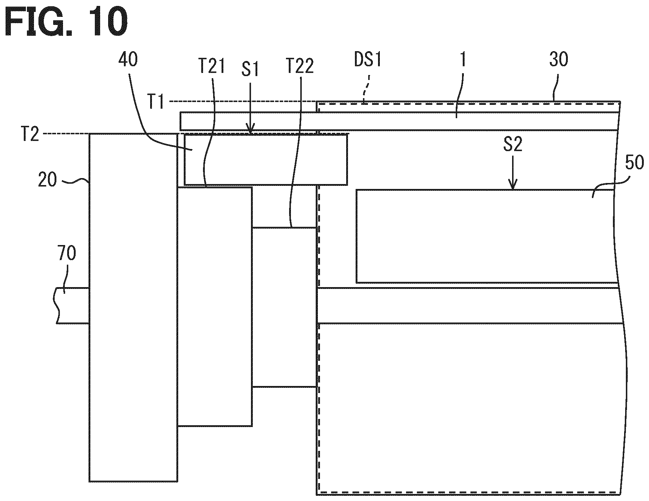

As shown in FIG. 10, in the motor unit 100, the diameter of the second gear 20 may be reduced in stages. In the fourth modification, the second gear 20 having a diameter that differs in three stages is adopted. The second gear 20 may have a diameter that varies in two or four stages.

The imaginary plane T2 is an imaginary plane that passes through an apex of a portion of the second gear 20 that has the largest diameter. A reference numeral "T21" indicates an apex of a part with the second largest diameter. A reference numeral "T22" indicates an apex of a part with the smallest diameter. The second gear 20 has, for example, a double helical gear at its largest diameter portion, and at least one of its second largest diameter portion and largest diameter portion being a differential gear.

The diameter D2 of the second gear 20 is a diameter of a portion of the second gear 20 where the diameter is the largest. In the configuration of the modification as well, the relationship D1 > D2 is satisfied. However, the diameter of the second gear 20 at the portion corresponding to the apex T21 and the portion corresponding to the apex T22 is smaller than the diameter D1 of the first gear 10.

The power module 40 is mounted between a portion that is the apex T21 of the second gear 20 and the imaginary plane T1. Therefore, in the modification, an imaginary plane that passes through the apex T21 and is aligned with the XY-plane can be regarded as the imaginary plane T2. In addition, the power module 40 may be mounted between the portion that is the apex T22 of the second gear 20 and the imaginary plane T1. In this case, an imaginary plane that passes through the apex T22 and is aligned with the XY-plane can be regarded as the imaginary plane T2.

The fourth modification can be implemented in combination with the above embodiment and the first to third modifications. The fourth modification can achieve the same effects as those of the above embodiment. In FIG. 10, in order to simplify the drawing, the heat sink 42, the heat dissipation fins 43, and the mounting portion 64 are omitted. However, the motor unit 100 of the fourth modification includes the heat sink 42, the heat dissipation fins 43, and the mounting portion 64 similar to the above embodiment.

Although the present disclosure has been described in accordance with the embodiments, it is understood that the present disclosure is not limited to such embodiments or structures. The present disclosure encompasses various modifications and variations within the scope of equivalents. In addition, while various combinations and modes are described in the present disclosure, other combinations and modes including only one element, more elements, or less elements therein are also within the scope and spirit of the present disclosure.

### Disclosure of Technical Idea

This description discloses a plurality of technical ideas described in a plurality of sections listed below. Some sections may be presented in a multiple dependent form in which a subsequent section refers to the preceding sections selectively. Moreover, some sections may be written in a multiple dependent form referring to another multiple dependent form. These sections written in the multiple dependent form define a plurality of technical ideas.

### Technical Idea 1

A motor unit includes a first rotating body (10), a second rotating body (30), a third rotating body (20), and a drive circuit (40, 50). The second rotating body is arranged in line with the first rotating body in a rotation axis direction of the first rotating body and rotates together with the first rotating body. The third rotating body is arranged in line with the first rotating body in an alignment direction different from the rotation axis direction and rotates together with the first rotating body. The drive circuit includes a capacitor and drives and rotates at least one of the first rotating body, the second rotating body, and the third rotating body. The capacitor is arranged adjacent to the second rotating body. The capacitor is also arranged adjacent to the third rotating body.

### Technical Idea 2

The motor unit according to technical Idea 1 includes a drive circuit that has a power module in addition to the capacitor. The first rotating body, the second rotating body, the third rotating body, and the power module are heat-generating components that generate heat due to rotational driving by the drive circuit. The motor unit further includes a heat shielding layer arranged in a facing region between the capacitor and the heat-generating components.

### Technical Idea 3

The motor unit according to technical Idea 2, the capacitor has two or more surfaces facing the heat-generating components. The heat shielding layer faces the two or more surfaces of the capacitor.

### Technical Idea 4

The motor unit according to technical Idea 2 or 3, the heat shielding layer includes a coolant flow path through which coolant flows.

### Technical Idea 5

The motor unit according to technical Idea 4, the motor unit has a heat dissipation member arranged between the capacitor and the coolant flow path.

### Technical Idea 6

The motor unit according to any one of technical Ideas 2 to 5 further includes a case housing the first rotating body, the second rotating body, the third rotating body, and the drive circuit. The case has a shaft hole. The third rotating body has a rotation shaft arranged in the shaft hole together with lubricating oil. The heat shielding layer is arranged between the capacitor and the rotation shaft. The capacitor faces the rotation shaft.

### Technical Idea 7

The motor unit according to technical Idea 4 or 5 further includes a case housing the first rotating body, the second rotating body, the third rotating body, and the drive circuit. An external connection terminal of the drive circuit is provided on the case. The coolant flow path is provided in a part of the case. The external connection terminal is provided at a position on the case different from the coolant flow path.

### Technical Idea 8

The motor unit according to according to any one of technical Ideas 1 to 7 includes the second rotating body which has a motor mechanism as a rotating part. The first rotating body includes a first gear as a rotating part connected to a rotation shaft of the motor mechanism. The third rotating body includes a second gear designed to mesh and rotate with the first gear.

### Technical Idea 9

The motor unit according to according to any one of technical Ideas 1 to 8 is mounted under a floor at a foot space of a front seat of a vehicle or under a cargo room of the vehicle.

## Claims

1. A motor unit comprising:
a first rotating body (10);
a second rotating body (30) arranged in line with the first rotating body in a rotation axis direction of the first rotating body and configured to rotate together with the first rotating body;
a third rotating body (20) arranged in line the first rotating body in an alignment direction different from the rotation axis direction and rotating together with the first rotating body; and
a drive circuit (40, 50) including a capacitor, and configured to drive and rotate at least one of the first rotating body, the second rotating body, and the third rotating body, wherein
the capacitor is arranged adjacent to the second rotating body, and
the capacitor is arranged adjacent to the third rotating body.

2. The motor unit according to claim 1, wherein
the drive circuit includes a power module in addition to the capacitor,
the first rotating body, the second rotating body, the third rotating body, and the power module are heat-generating components which generate heat due to rotational driving by the drive circuit, and
the motor unit further comprises a heat shielding layer arranged in a facing region between the capacitor and the heat-generating components.

3. The motor unit according to claim 2, wherein
the capacitor has two or more surfaces facing the heat-generating components, and
the heat shielding layer faces the two or more surfaces of the capacitor.

4. The motor unit according to claim 3, wherein
the heat shielding layer includes a coolant flow path through which coolant flows.

5. The motor unit according to claim 4, further comprising
a heat dissipation member arranged between the capacitor and the coolant flow path.

6. The motor unit according to any one of claims 2 to 5, further comprising
a case housing the first rotating body, the second rotating body, the third rotating body, and the drive circuit, wherein
the case has a shaft hole,
the third rotating body has a rotation shaft arranged in the shaft hole together with lubricating oil,
the heat shielding layer is arranged between the capacitor and the rotation shaft, and
the capacitor faces the rotation shaft.

7. The motor unit according to claim 4 or 5, further comprising:
a case housing the first rotating body, the second rotating body, the third rotating body, and the drive circuit; and
an external connection terminal of the drive circuit provided on the case, wherein
the coolant flow path is provided in a part of the case, and
the external connection terminal is provided at a position on the case different from the coolant flow path.

8. The motor unit according to claim 1, wherein
the second rotating body includes a motor mechanism as a rotating part,
the first rotating body includes a first gear as a rotating part connected to a rotation shaft of the motor mechanism, and
the third rotating body includes a second gear configured to mesh and rotate with the first gear.

9. The motor unit according to claim 1, wherein
the motor unit is mounted under a floor at a foot space of a front seat of a vehicle, or under a cargo room of the vehicle.
